(19)

Europäisches
Patentamt
European
Patent Office
Office européen
des brevets

(11) **EP 2 645 270 A1**

(12) **EUROPEAN PATENT APPLICATION**

(43) Date of publication:
**02.10.2013 Bulletin 2013/40**

(51) Int Cl.:
**G06F 17/24** (2006.01)  **G06F 17/27** (2006.01)
**G06F 3/048** (2013.01)

(21) Application number: **12305385.2**

(22) Date of filing: **30.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Orange**
**75015 Paris (FR)**

(72) Inventors:
• **RONG, Letian**
**TOKYO, 1640012 (JP)**
• **AUVRAY, Vincent**
**50460 TONNEVILLE (FR)**

(74) Representative: **Orian, Yvette Suzanne et al**
**Cabinet Beau de Loménie**
**158, rue de l'Université**
**75340 Paris Cédex 07 (FR)**

(54) **E-reader device and method, with automatic display of word meanings**

(57)     In an e-reader (1), the meanings of advanced words are displayed automatically. The automatic word-meaning display is controlled dynamically based on a skip parameter that is linked to the page-flipping rate, so that the likelihood of automatic display of a given word decreases if the user's page-flipping speed indicates that the user has not been reading the meaning of this word at times when it has been displayed in the past. Automatic word-meaning display can be controlled in different ways based on the skip parameter, for example: by preventing automatic display of the word meaning when the skip parameter for this word takes a value above/below a threshold; and by changing the intervals between instances when the word meaning is automatically displayed, based on the skip parameter value. The value of the skip parameter for a given word can be updated if the user manually causes the meaning of this word to be displayed. A dictionary module (17) can store the word meanings for automatic display; words can be retired from and loaded into the dictionary.

FIG.1

EP 2 645 270 A1

**Description**

Field Of The Invention

The present invention relates to the field of e- readers, that is, devices which display an electronic version of a book, or other text, for reading by a user. More particularly, the invention relates to e- readers that offer a word- meaning (word- explanation) display function.

Background Art

Nowadays, dedicated e- reader devices as well as e- reader software for running on general- purpose devices (personal computers, mobile phones, tablet computers, etc.) are widespread. In the following text, unless the context requires otherwise the expression "e- reader" will be used to designate any device that enables a user to read an electronic version of a text- whether the device is a dedicated e- reader device, or a general- purpose device running e- reader software- or indeed the e- reader software itself.

E- readers offer additional features to enrich the reading experience, beyond the functions typically available with paper- based publications. For example, several commercially- available products include pre- stored dictionaries which allow the user to look- up words, including words in the text currently being displayed. In some known products there is an interactive word- definition display function that must be activated by the user, for example by moving a cursor over a word in the text so that a textual explanation of the meaning of this word can then be displayed nearby on the screen. The user may also need to select the dictionary from which the displayed definitions will be taken (e.g. French- English dictionary for advanced words level 1, level 2, etc.) . It may be considered that the conventional e- readers provide a word look- up function.

It can be advantageous to provide an automatic word-definition display function whereby definitions of "advanced" words are displayed without explicit requests from the user. Such an automatic word-definition display function can be useful for teaching purposes, notably to enable young readers (e.g. school students) to learn words, or to assist in language learning (e.g. helping an English reader to learn French).

When it is desired to provide an automatic word-definition display function in an e-reader a number of problems are encountered.

Firstly, if an automatic word- definition display function is implemented on an e- reader in a static manner then the user is liable to be presented with the definition of a given advanced word over and over again, even when he has learned the meaning of the word in question. The frequent display of meanings for words the user already knows will tend to fill up the space on the display screen, potentially restricting the amount of normal text that can be displayed, and the user is liable to find the frequent display of known words to be annoying. One possible solution would be to provide a facility for allowing the user to switch off the automatic display of the meaning of a selected word in the future. However, this potential solution has the disadvantage that it requires specific action to be taken by the user in relation to each word, which may prove time- consuming for the user. Moreover, the user may switch off the automatic display of a word definition before his knowledge of the selected word has been consolidated fully.

Secondly, in a system for automatic display of word meanings it is necessary to have backend dictionaries that store the more advanced words that are liable to be encountered in texts and that may require explanation. Ideally the words whose definitions are displayed automatically should be words that the individual reader does not know or are at the boundary of his knowledge. However, in general, a personalized dictionary will not be available. Furthermore, although numerous dictionaries exist it is unlikely that a predefined dictionary will match the needs of a given individual, taking into account the large variation that will be encountered in readers' vocabularies (dependent on factors such as age, level of education and/or experience in learning the target language, degree of similarity between the target language and the reader's mother tongue, etc.) . If the user needs to undertake a search through dictionary databases in order to find a dictionary listing words that match his level of comprehension of written language then the search process is liable to be very time- consuming. Moreover, as the user's linguistic knowledge advances, he may need to search for a different dictionary.

The present invention has been made in view of the above problems.

Summary of the Invention

The present invention provides an e-reader, and a method of controlling automatic word-meaning display in an e-reader, in which the automatic display of word meanings is controlled in a dynamic manner, notably enabling the automatic display of a given word to be switched off, and/or changed in frequency, and/or switched back on without requiring an explicit instruction from the user.

The present invention provides e-reader device comprising:

a reading module configured to control display of portions of a text;

at least a first user operable control configured to enable the reading module to progressively display portions of said text;

a dictionary module configured to determine whether the next portion of text to be displayed by the reading module comprises at least one of the words in a first set of words; and

an automatic word-meaning-display module configured to display, in association with said next portion of the text, the meanings of words comprised in the first set of words that appear in said next portion of text,

wherein:

the e-reader device comprises:

a monitoring module configured to monitor the rate at which portions of the text are displayed by the reading module;

a skip parameter calculation module configured to generate, for each of the words of said first set of words, a skip parameter based at least in part on the rate, determined by the monitoring module, at which portions of the text are displayed when the meaning of said word is displayed; and

the automatic word display module is configured to dynamically control the display of the meaning of a word appearing in the next portion of the text, dependent on the value of the skip parameter for said word.

According to the present invention the rate at which portions of the text are displayed (e.g. the user's page-flipping speed, or scrolling speed) is used in the dynamic control of the automatic word-display function. If the page-flipping speed is high on occasions when the definition of a particular word is being displayed then this tends to suggest that the word definition is not being read. Accordingly, it is considered that the rate at which portions of the text are displayed can be used as a parameter for controlling the continuation or discontinuing of automatic display of words, or as a parameter for determining how to change the intervals between occasions when this word's meaning will be displayed automatically.

Advantageously, the automatic word display module may be configured to inhibit the automatic display of a detected word when the value of the skip parameter for that word indicates that portions of the text are displayed rapidly on occasions when the meaning of this word is displayed. The automatic word display module may be configured to compare the skip parameter to a threshold value in order to determine whether or not to cause the meaning of the word to be displayed automatically.

Advantageously, the dictionary module may be configured to remove a word from the dictionary dependent on the value of the skip parameter of that word relative to a threshold value. The dictionary module may further be configured to load words selected from a database.

In the e-book reader according to the invention, an increase in the probability of automatic display of a given word can be triggered by a determination that the user has manually requested display of the meaning of that word. This optional feature ensures that in the case of a word that the user is finding hard to learn, the word-meaning will be displayed automatically a greater number of times than normal.

The present invention further provides a method of controlling automatic word-meaning display in an e-reader, the method comprising the steps of: progressively displaying portions of a text in response to an activation of at least a first user operable control; determining whether the next portion of text to be displayed comprises at least one word in a first set of words; and displaying, in association with said next portion of the text, the meanings of words in said first set of words that the determining step has determined appear in said next portion of the text; wherein there are further provided the steps of: monitoring the rate at which portions of the text are displayed; and generating, for each of the words of said first set of words, a skip parameter value based at least in part on the rate, determined in the monitoring step, at which portions of the text are displayed when the meaning of said word is displayed; and wherein the word-meaning displaying step dynamically controls the display of the meaning of a word determined by the determining step as appearing in the next portion of the text, dependent on the skip parameter value generated for said word in the skip parameter value generating step.

The present invention still further provides a computer-readable medium bearing computer-executable instructions adapted to cause a computer system to perform the above-mentioned method.

Further features and advantages of the present invention will become apparent from the following description of preferred embodiments thereof, given by way of example, and illustrated with reference to the drawings described hereinafter.

Brief Description of the Drawings

Fig.1 shows an example of an e-reader displaying a page with associated word meanings;
Fig.2 is a functional block diagram illustrating the functions performed in an e-reader according to one embodiment of the invention; and
Fig.3 is a block diagram of hardware that may be used to implement the e-reader according to Figs.1 and 2.

Detailed Description of the Preferred Embodiments

In the description below reference will be made to e-book readers and e-books. However, it is to be understood that the invention is applicable irrespective of whether the displayed text is a book or some other kind of text, such as a web page.

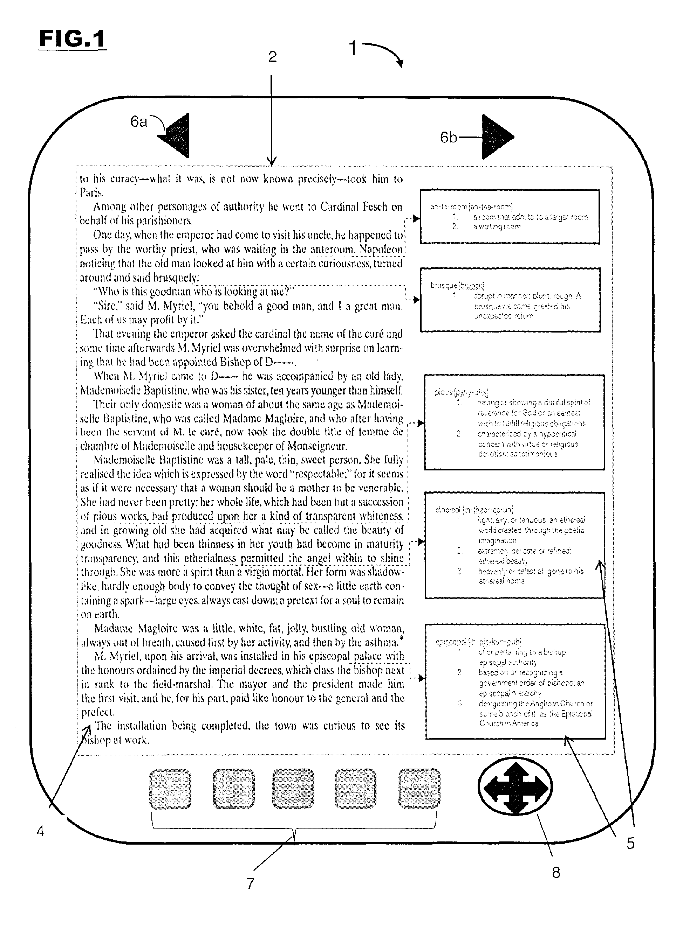

A first preferred embodiment of an e-reader device according to the present invention will now be described with reference to Figs.1 to 3. The present invention is not particularly limited with regard to the structure of the e-reader and the example illustrated in Fig.1 represents an e-book reader device in simplified form.

Figure 1 illustrates an example of a text page displayed on the screen of a dedicated e-book reader device 1. As illustrated in Fig.1, the e-book reader device 1 includes a display screen 2 having a region 4 where a portion of a text ("normal text") is displayed for reading by the user and a smaller region where word definitions 5 are displayed for certain "advanced" words that are present in the normal text. In this example the definitions of five "difficult" words are displayed, automatically, to the right of the normal text region 4.

In the example illustrated in Fig.1, the e-reader includes a number of controls 6a, 6b, 7 and 8 that are intended to be activated by the user, notably so that he can select texts for display and navigate within the displayed texts, as well as performing ancillary functions such as downloading and managing texts, consulting embedded dictionaries, etc.

Fig.1 illustrates forward and back arrows, 6a and 6b, which allow a user to move forward or back one page in the displayed text (a page or portion of the text being the quantity of text  displayed in the normal text display region 4 at one time), function buttons 7, and a four-way pad 8 which can be used, for example, to move an on-screen cursor (not shown in Fig.1). It is to be noted that the invention is not limited with regard to the type or number of user controls; the controls illustrated in Fig. 1 are shown merely as an example.

In e-readers according to the present invention, an automatic word-definition function is provided which automatically displays meanings for selected words that appear in the normal text displayed on the e-reader screen. The present invention is not particularly limited with regard to the criteria used for deciding the pool of words whose meanings could be displayed. Typically, the selected words whose meanings will be displayed are "advanced" words: this may mean words which constitute part of an advanced vocabulary in the language in question (e.g. the vocabulary of an older person, or of a highly-educated person, or of a literary expert), or words which, although not "advanced" in absolute terms, are difficult for a particular user of the device. For example, when a foreign-language text is being read it may be appropriate to display meanings for words whose level of inherent difficulty is relatively lower than when the user is reading a text in his native language. Other approaches could also be used for deciding which words to include as potential candidates to have their meanings displayed automatically. Well-known techniques can be used for grading the level of "difficulty" of different words, to enable words to be selected based on their difficulty level.

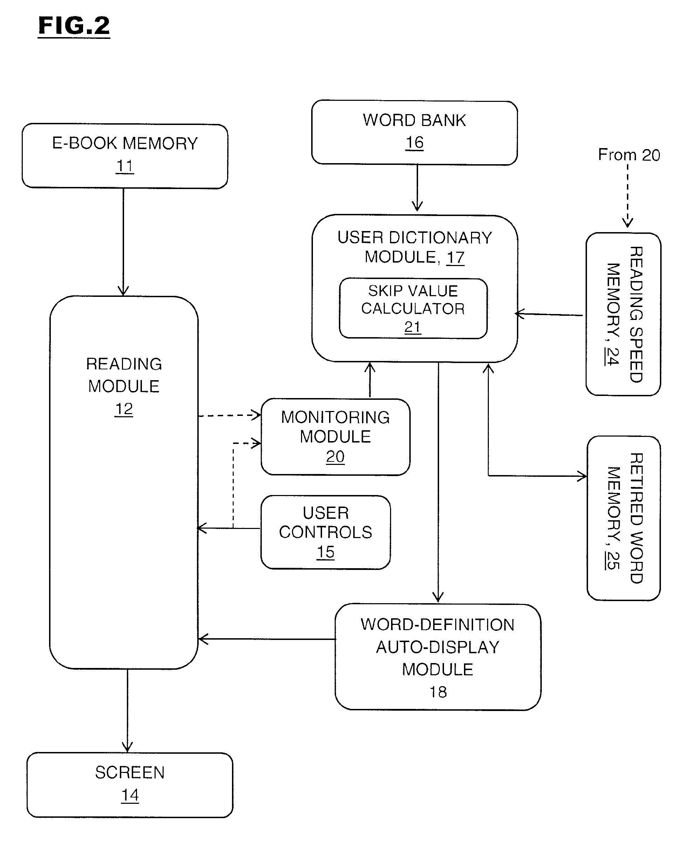

Fig.2 is a block diagram of the functional modules included in the e-book reader 1 of the present embodiment. It should be remarked that Fig.2 represents one particular manner in which the functions performed in the e-book reader can be decomposed. In practice, some or all of the illustrated functional modules may be implemented in software and there may not be a one-to-one relationship between the individual described functions and component blocks of the software. In other words, although Fig.2 may represent a single module performing a particular function, in practice two or more cooperating modules may be used to implement the corresponding function. In a similar way, although Fig.2 may show two or more separate modules which cooperate to perform various functions, in practice the relevant functions may be implemented using a different number of modules and the distribution of functions between those modules may differ from the description below.

As shown in Fig.2, the e-book reader 1 of the present embodiment includes an e-book memory 11 storing the texts that the user can read and an e-book reading module 12 employing  conventional elements to provide usual functions such as display of and navigation in the text, as well as management of a collection of e-books and other ancillary functions. A screen 14 is provided for displaying the text for reading by a user. User-operable controls 15 (e.g. as mentioned above) are provided in the e-book reader. Conventional modules may be used to implement the foregoing units and conventional methods may be used to manage the interactions between them, although a conventional e-book reading module 12 may require some minor adaptation to enable it to automatically display meanings of advanced words in conjunction with the display of the normal text. Such minor modifications are well within the capabilities of the skilled person and will not be described here.

In the e-reader according to the present embodiment additional elements are provided, notably a word bank 16 and a dictionary module 17, a monitoring module 20, and a word-definition auto-display module 18. The dictionary module 17 includes a skip value calculator 21 that is described in greater detail below. Respective memories 24, 25 are provided for storing an indication of the user's normal reading speed and for storing words that have been "retired" from the dictionary. It is to be understood that the memories 24 and 25 may be combined into a single memory and/or incorporated into the dictionary module 17.

The functions of the various modules illustrated in Fig.2 will now be described.

The dictionary module 17 stores a dictionary, that is, the current set of "advanced words" whose meanings may be displayed automatically to the user (juxtaposed to the displayed normal text) when they appear in the normal text that is being displayed. The expression "advanced words" should not be taken to imply any particular objective degree of linguistic complexity, merely that the selected words are intended to be words whose meanings it is appropriate to display to this user (e.g. because he is learning the meanings of these words). The dictionary module 17 stores the current set of words and their associated meanings (definitions, explanations).

The dictionary module 17 may hold multiple dictionaries, for example one for each of a number of different languages. When the automatic word-meaning display function is implemented, the dictionary module 17 selects the appropriate dictionary automatically based, for example, on the language of the text being read (although other approaches could be used). If desired, the dictionary module 17 may be configured to hold different dictionaries for different users (with suitable means - e.g. a user sign-in function - being provided to enable the e-reader to identify the user operating the e-reader at a particular time).

In the present embodiment of e-reader according to the invention, the set of words in a dictionary is not static. On the contrary, the dictionary module 17 can add new words to a dictionary by loading words from a word bank 16. The word bank 16 can take a variety of forms but typically will be a set of one or more predefined dictionaries, which may include dictionaries specific to different languages (e.g. a Spanish-English dictionary, a French-English dictionary, one or more dictionaries of a particular language, a glossary applicable to a particular field of technology, etc.). Part or all of the word bank 16 may be constituted by a database held on a removable recording medium and/or by a database accessed via a network connection. Dictionary modules suitable for constituting the word bank 16 already exist.

In the e-reader according to the present embodiment, the dictionary module 17 inputs a first batch of "advanced words" chosen at random from a predefined dictionary in the word bank 16 into the dictionary (or dictionaries) at the time when the automatic word-definition display function is initialized in the e-book reader. However, the initial batch of words may be loaded into a dictionary at some other time, for example, on the first occasion when the dictionary module 17 is taking part in automatic word-meaning display for a text in the language covered by this dictionary. The particular dictionary in the word bank 16 that is used as the source of the loaded words can be determined in a variety of ways, for example it may be set beforehand by the user, pre-programmed by the publisher of the e-book reader, selected at random, etc.

The dictionary module 17 may load an initial batch of words into a dictionary from the selected predefined dictionary in the word bank 16 based on a selection rule. A wide range of different selection rules may be applied, including but not limited to: selecting words at random (for example selecting at random a predefined number, n, of words of a specified difficulty level, $d$); selecting predefined word lists of increasing difficulty in a predetermined order; selecting words of specified difficulty level in alphabetical order; selecting words that the user has specified; etc. In general, the words stored in the word bank 16 will be associated with an indication of their difficulty level, in accordance with well-known techniques. If desired, the initial batch of words for a given dictionary may be selected from across more than one predefined dictionary stored in the word bank.

The selection of the initial batch of words for loading in a dictionary may be based on an indicator quantifying a difficulty level that corresponds to the user's current ability/knowledge. The appropriate difficulty level can be determined in a variety of ways including but not limited to: measurement (for example, via a preliminary rating process in which the user is presented with a list of predetermined words of varying difficulty value in order to assess a difficulty value corresponding to his understanding), explicit setting by the user, and others. Moreover, a facility may be provided for adjusting this threshold difficulty level (manually and/or automatically).

The monitoring module 20 shown in Fig.2 monitors the rate at which portions of the text are displayed on the screen. In the present embodiment the e-book reader 1 displays text on a page-by-page basis and the monitoring module 20 measures the page flipping speed - that is the speed at which the user advances from one page of displayed text to the next - for example by measuring the time between the moment when the user instructs display of a given page and the moment when he instructs display of the next page. The monitoring module 20 may determine the page flipping speed based on data obtained from the reading module 12 but it could be configured to determine the page flipping speed based on signals received directly from the user controls (e.g. timing the interval between successive presses on the button 6b shown in Fig.1). The latter possibility is indicated by the dashed lines in Fig.2. It will be understood that monitoring of the page flipping speed may be achieved by measuring the time spent reading a page (there is a reciprocal relationship between the time spent reading one page and the page flipping speed).

The monitoring module 14 also monitors the word count of normal text (i.e. the text not including automatically-displayed word definitions) of the current page or portion of the text, as well as receiving the actual text of the next page from the reader module 13. The monitoring module 20 supplies to the dictionary module 17: the page flipping speed it has determined, the word count for the current page, and the actual text for the next page.

The dictionary module 17 checks whether the next page of text notified to it by the monitoring module 20 contains any of the current set of advanced words held in the applicable dictionary module 17. If one or more of the current set of words does appear on the next page of text then this word is a candidate to have its meaning displayed automatically when the next page of text is displayed on the screen 14. It is possible that there may be numerous words in the applicable dictionary that all appear on the next page of the text, leading to a situation where there are several candidates to have their meanings automatically displayed.

A noteworthy feature of the present invention is the fact that the word-meaning automatic display function is implemented in a dynamic, rather than a static manner. In other words, it is not inevitable that the meaning of an advanced word will be displayed even if it appears on the next page of text and is included in the current set of words held in the dictionary module 17. On the contrary, on an occasion when a user-dictionary word is found to appear in the next portion of the text a decision process is performed to decide whether or not to automatically display the meaning of this word. The decision process is based on the value of a skip parameter that is defined for each word in the dictionary. In the present embodiment, the skip value calculator 21 of the dictionary module 17 uses the page flipping speed and the word count for the current page to calculate and update skip parameter values. One preferred algorithm for calculating the value of the skip parameter will be described below.

For the time being it should be mentioned that when calculating the skip parameter values the skip value calculator 21 of the present embodiment takes into account the user's normal reading speed. An indication of the user's normal reading speed is stored in the reading speed memory 24 illustrated in Fig.2. The invention is not limited with regard to the technique used for obtaining an indication of the user's normal reading speed. One possibility is that the user's normal reading speed can be input manually by the user. Another possibility is for the user's normal reading speed to be calculated automatically, for example via a reading trial, or by monitoring the user's use of the e-reader device, or in any other convenient manner.

In the present embodiment, the dictionary module 17 is configured to take into account the skip parameter values of the words that are candidates to have their meanings automatically displayed in juxtaposition to the next page of text. In this embodiment, the dictionary module 17 is configured to compare the skip parameter values with a first predetermined threshold value and, if a candidate word has a skip parameter value that is higher than the first threshold, then the meaning of this word will not be displayed automatically.

The dictionary module 17 notifies the word-definition auto-display module 18 of the list of words that appear on the next page of text, that are in the relevant dictionary and which have skip parameter values that have been found to be equal to or lower than the first predetermined threshold, as well as providing the corresponding word meanings. The word-definition auto-display module 18 then communicates with the reading module 12 to cause the textual explanations of the notified words to be incorporated into the visual representation of the next page that will be displayed on the screen 14. As illustrated in Fig.1, the relevant word meanings may be displayed in juxtaposition to the normal text when the next page of text is displayed. Naturally, it is preferable to display the textual explanation of a given word only once on a particular page, even if multiple occurrences of the same word appear on this page.

The dictionary module 17 may be configured to apply additional selection rules when deciding which words to notify to the word-definition auto-display module 18 for display as part of a given page of the text. For example, if there is a large number of dictionary words that appear on the next page of the text and which have suitable skip parameter values then the displayed page could become cluttered if the meanings of all of these words were to be displayed in juxtaposition to the text. Accordingly, the dictionary module 17 may be configured to notify the word-definition auto-display module 18 with details of only a sub-set of these words, for example a subset containing a given number of words, a subset corresponding to word meanings that can be expressed using a number of words not greater than a predetermined number (so as to occupy an on-screen region of limited size), etc. The value of the skip parameter may be taken into account when selecting the subset of words, for example, selecting the 5 words having the lowest skip parameter values.

One preferred algorithm for calculating the value of the skip parameter will now be described. It is to be understood that other algorithms could be used for generating a parameter which is indicative of the user's rate of advance through the text when a particular word from the dictionary is having its meaning displayed.

For each advanced word in the dictionary the present algorithm calculates a skip parameter which takes into account how quickly the user reads pages on which the meaning of this word has been automatically displayed and, in particular, the skip parameter value incorporates an element which seeks to quantify how much the user's reading speed is being slowed down by reading automatic word definitions.

If the user's normal reading speed is designated $\text{Speed}_{overall}$, and the word count for a given page $p$ of text that can be displayed on the screen at a given time is designated $Count_p$, then a prediction can be made as to how much time $Time_{predicted\_normal\_text}$ the user should take to read the normal text on page **p,** as follows:

$$Time_{predicted\_normal\_text} = Count_p/Speed_{overall} \qquad \textbf{(Equation 1)}$$

In a similar way, if **Y** advanced words have their meanings automatically displayed on page p, and the word count for a given word **m** of these words is designated $Count_m$, then the predicted time $Time_{predicted\_descriptive\_text}$ the user will spend on reading the textual descriptions of the advanced words on page **p** is, as follows:

$$Time_{predicted\_descriptive\_text} = [\textstyle\sum_{m=1}^{Y} Count_m]/Speed_{overall} \qquad \textbf{(Equation 2)}$$

Assuming that the monitoring module 20 has determined that the user actually took a time $Time_p$ for reading page **p**, then a skip parameter $Skip_p$ may be calculated for page **p**, as follows:

$$Skip_p = 1 - \frac{Time_p - Time_{predicted\_normal\_text}}{Time_{predicted\_descriptive\_text}} \qquad \textbf{(Equation 3)}$$

It will be understood that the skip parameter calculated for page **p** according to Equation 3 will tend to have a high value if the user only read the normal text on page **p** and skipped over (i.e. did not read) the word meanings that were automatically displayed on page **p,** whereas the skip parameter will tend to have a low value if the user is reading the displayed word definitions as well as the normal text. If skip parameter values are consistently high when the meaning of a given word is displayed then this is consistent with the user not reading the word meaning and the user is unlikely to be inconvenienced if the automatic display of this word meaning is stopped.

A skip parameter calculated according to equation 3 above has the same value for all of the advanced words whose meanings were displayed on page **p.** However, it is advantageous for the decision to continue automatic word-meaning display to be taken for individual words, rather than for groups of words. Accordingly, it is advantageous to calculate an individual skip parameter value for each of the words in the dictionary.

One technique that may be used to calculate an individual skip parameter for each of the "advanced" words, takes into account the history of user reading, or skipping, word definitions on previous occasions when the meaning of this same word has been displayed automatically, for example according to equation 4 below:

$$Skip_{m\_new} = (Skip_{m\_old} + Skip_p)/2 \qquad \textbf{(Equation 4)}$$

where $Skip_{m\_old}$ is the value of the skip parameter for the word m before page **p** has been taken into account, and $Skip_{m\_new}$ is the updated value of the skip parameter for word **m** after page **p** has been taken into account (it will be understood that $Skip_p$ in equation 4 is the skip parameter value for the most recent page **p** on which the meaning of this word **m** has been displayed automatically). In this embodiment, the value $Skip_{m\_old}$ is zero when the meaning of word **m** has not yet been displayed automatically on a page.

Even though the value of $Skip_{m\_new}$ is calculated from skip parameter values $Skip_p$ that are common to the group of words whose meanings were displayed on a given page **p**, the value of $Skip_{m\_new}$ is based only on skip values calculated for pages on which the meaning of word **m** has been automatically displayed and, over time, a given word **m** will have its meaning displayed with different combinations of other advanced words. Accordingly, the value of $Skip_{m\_new}$ tends to become representative of the user's behaviour on the previous instances when this word **m** had its meaning displayed automatically, and the quantity $Skip_{m\_new}$ may be designated the "overall" skip value for the word **m**.

It will be understood from equation 4 above that the value of $Skip_{m\_new}$ depends heavily on the $Skip_p$ value applicable to the latest page on which word **m** appears, and the contribution from the skip values for earlier pages when the meaning of word **m** was automatically displayed gets progressively lower. It will be understood that an overall skip parameter value for a particular word **m** may be calculated in other manners, for example using a different relative weighting for the skip values $Skip_p$ relating to the various instances when word **m** had its meaning automatically displayed.

The inventors realize that e-book reading may be interrupted and have understood that if a user looks away from the page he is reading, for example to engage in conversation with another person, then the measured page reading

time $Time_p$ will not be a true reflection of the time it has taken the reader to read the displayed text. It is disadvantageous for an interruption of this kind to produce an effect on the value of the skipping parameter. An undesired effect of this kind may be avoided by including an additional step in the calculation of the skip parameter for page *p*, notably a stage of checking whether the value of the actual page reading time $Time_p$ is an outlier (that is, a value that is numerically distant from the usual range of values for this parameter). If this check indicates that the actual page reading time for a given page *q* is an outlier, then no value of the skip parameter will be calculated for page *q*. (and/or this page's skip parameter value will not be used when calculating individual skip parameter values for the different words in the dictionary).

Various techniques are known from the field of statistics for determining whether or not a particular value is an outlier. In the invention any convenient technique may be employed for determining whether or not the actual page reading time $Time_p$ is an outlier including, but not limited to: Chauvenet's criterion, Grubbs' test, Dixon's Q test, and others.

A numerical example will now be given of a method by which the apparatus illustrated in Fig.2 may calculate a skip parameter value $Skip_{m\_new}$ according to equations 1 to 4 above.

Consider the case of a page *p* including 200 words, 5 of which are advanced words listed in the applicable dictionary and whose meanings are automatically displayed. If the reading speed memory 24 stores data indicating that the user's normal reading speed is 100 words per minute then the skip value calculator 21 applies equation 1 above to predict the time, $Time_{predicted\_normal\_text,}$ that the user is likely to spend in reading the normal text on page *p* (i.e. the text excluding the automatically-displayed word meanings). In the present example the predicted time for reading the normal text is 2 minutes.

If the five automatically- displayed word meanings take up 15, 15, 15, 20 and 30 words respectively, then the skip value calculator 21 applies equation 2 above to predict the time, $Time_{predicted\_descriptive\_text,}$ that the user is likely to spend if he reads the automatically- displayed word meanings. In the present example the predicted time for reading the automatically- displayed word meanings is 1 minute (i.e. (15+15+15+25+30) / 100) .

Let us assume that the monitoring module 20 has determined that the user took 2.4 minutes to advance from page *p* to page *p*+1**,** in other words, the assumed reading time for page *p* is 2.4 minutes. The skip value calculator 21 applies equation 3 above to calculate the skip parameter value $Skip_p$ for page *p*, yielding a value of 0.6. If the previous skip parameter value $Skip_{m\_old}$ for a particular word *m* among the five words whose meanings were displayed automatically on page *p* was 0.1, then the new overall skip parameter value $Skip_{m\_new}$ for this word *m* becomes 0.35 as calculated by the dictionary module 17 applying equation 4 above. Therefore, for future occurrences of word *m* in the text, the dictionary module 17 will apply skip parameter value 0.35 when deciding whether or not the meaning of word *m* should be displayed automatically.

According to the present invention a skip parameter based on how quickly the user is advancing through the text is used to dynamically control automatic word-meaning display. However, the dynamic control may be exercised in different manners including, but not limited to, the two dynamic control methods described below.

<u>First dynamic control method</u>

In the e-reader device of Figs.1 and 2, the dictionary module 17 may be configured to implement a first dynamic control method to decide whether or not to supply details of a candidate word to the word-definition auto-display module 18. According to the first dynamic control method the dictionary module 17 compares the skip parameter value for the candidate word with a first threshold value. In a case where the skip parameter value is calculated according to equations 1 to 4 above, the dictionary module 17 checks whether the skip parameter value is above a first predefined threshold level and, if it is, then the dictionary module 17 does not provide details of this word (and its meaning) to the word-definition auto-display module 18; thus the meaning of this word is not automatically displayed when the next page of text is displayed. The value of the first threshold may be configurable (for example, it may be changed by the user or using the user's learning curves).

Typically the dictionary module 17 may be designed or set up so that, when the skip parameter for a word has attained such a value that the meaning of this word will no longer be displayed automatically, a new word (i.e. a replacement word) is loaded into the applicable dictionary. It is advantageous for the dictionary to be configured to keep track of which words have already formed part of the dictionary, so that the same word is not re-loaded into the dictionary multiple times.

Further, when the skip parameter value for a given word is found to have climbed above the first threshold value, the dictionary module 17 may be configured to remove this word from the dictionary. The removal of a word from the dictionary may consist in simple deletion of the word (which, in general, will still be in the word bank 16) . However, the e- reader may be further configured to "retire" the word in question, that is, to transfer the word from the dictionary to the retired word memory 25.

Because automatic word-meaning display is discontinued after a period (based on a parameter which tends to correlate with whether or not the user has learned the word), it is believed that, over time, the contents of the dictionary will evolve so that the dictionary module 17 is automatically displaying words that are appropriate for this particular user, even if the initial words in the dictionary were selected at random. Thus, the invention removes the need for the user to search for a personalized dictionary, instead a personalized dictionary is built for him.

It will be understood from the above explanation that when the first dynamic control method is used an advanced word will be loaded into the dictionary, and its meaning will be displayed automatically, on each occasion when this word is found to appear in the text until such time as the skip parameter value for this word exceeds the first predetermined threshold. Accordingly, the user will be presented with the meaning of a given advanced word on a series of occasions and then the auto-display of this word will stop (it is assumed that this word meaning has been learned). The number of occasions on which the word-meaning is automatically displayed to the user depends on the particular weighting that is applied to calculate the overall skip parameter value for a word based on previous instances when this word's meaning has been automatically displayed, as well as on the level of the first threshold against which the skip parameter value is compared.

It is possible that the automatic display of a given word may be stopped before the user has truly learned the word in question and/or that the user may simply forget the meaning of a particular word. One technique for tackling this problem consists in re-starting the automatic word display, notably by updating the skip parameter value applicable to the word in question, if it is detected that the user has manually requested display of the meaning of this word. Accordingly, the e-reader 1 may include a control that the user can operate to cause the meaning of a selected word to be displayed. The monitoring module 20 may be configured to detect use of this user control and to inform the dictionary module 17 of the word whose meaning has been looked up manually. The dictionary module 17 may be configured to access the retired word memory 25 to check whether the looked-up word is one of the retired words whose meaning used to be displayed automatically, and to re-load this retired word back into the dictionary with an updated value of its skip parameter. For example, the skip value calculator 21 may be configured to update the skip parameter value of the restored word by changing the old skip parameter value by a predetermined amount. In the case where the skip parameter's value is calculated according to equations 1 to 4 above, the skip value calculator 21 could be configured to deduct a set increment from the old skip value of a restored word, notably so that the updated skip parameter value is lower than the first predetermined threshold. Alternatively, the skip value calculator 21 could be configured to set a new skip value for the restored word, disregarding the old skip parameter value of this word.

Alternatively or additionally, if the dictionary module 17 determines that the user has manually looked-up a word that does not form part of the current dictionary and is not a word in the retired word memory, then the dictionary module 17 may be configured to load this word into the applicable dictionary and to assign it a skip parameter value of zero (or some other default value).

In the example discussed above the skip parameter value $Skip_{m\_new}$ for a given advanced word had a relatively larger value when the user's page flipping speed suggested that the word's meaning was not (or no longer) being read and a relatively lower value when the user's page flipping speed suggested that the reader was reading the automatically-displayed word meaning, and the automatic display of the word meaning was repeated as long as the skip parameter value $Skip_{m\_new}$ remained below or equal to a first threshold level (and stopped when the skip parameter value is above the first threshold). However, the invention is not limited to this method.

On the contrary, the skip parameter value $Skip_{m\_new}$ may be defined in such a manner that it takes a relatively smaller value when the user's page flipping speed suggests that the word's meaning is not being read and a relatively larger value when the user's page flipping speed suggests that the reader is reading the automatically-displayed word meaning. In the latter case, the automatic display of the word meaning may be repeated until such time as the skip parameter value $Skip_{m\_new}$ decreases below a second predetermined threshold level (which may have the same value as, or a different value from, the first threshold mentioned above, as appropriate).

Similarly, according to the description above the automatic word- meaning display is repeated if the skip parameter value $Skip_{m\_new}$ is equal to the second threshold value, only stopping when the skip parameter value is above the second threshold. However, the algorithm may be regulated so that word- definition auto- display is continued only when the skip parameter value $Skip_{m\_new}$ is below the second threshold level. In other words, the designer can select what happens when the skip parameter value $Skip_{m\_new}$ is equal to the second threshold level. This is also the case in a method where the skip parameter value is defined to take a large value when the page flipping speed suggests that the user is reading the word meaning.

Second dynamic control method

In the first dynamic control method discussed above, the skip parameter value $Skip_{m\_new}$ is used in a binary fashion: word meaning auto-display is either enabled or disabled depending on the value of the skip parameter relative to a threshold value. In a second dynamic control method according to the invention, the skip parameter value is used in a different fashion, namely to alter the frequency with which a word meaning is automatically displayed (i.e. to alter the intervals between instances when the word meaning is automatically displayed).

The second dynamic control method according to the invention may employ the skip parameter value $Skip_{m\_new}$ that is calculated according to equations 1 to 4 above.

According to the second dynamic control method according to the invention, the current value of the skip parameter $Skip_{m\_new}$ as calculated according to equations 1 to 4 above is used as a probability determining the likelihood that the meaning of this word *m* will <u>not</u> be displayed automatically on an occasion when this word appears in the text of the next page. For example if, on an occasion where the dictionary module 17 determines that word *m* appears on the next page of text, the current value of the skip parameter for word *m* is 0.35, then there is only a 35% chance that the dictionary module 17 will decide not to notify this word to the word-definition auto-display module 18 for display of its meaning in association with the next page of text. If the skip parameter value for word *m* remains at 0.35, then approximately 7 times out of every 20 when the dictionary module determines that word *m* appears on the next page of text the meaning of word *m* will be automatically displayed.

In practice the skip parameter value is unlikely to be static but is likely to evolve in a direction involving a progressively lower probability of automatic display of this word's meaning. Accordingly, when the second dynamic control method is implemented the intervals between instances when the meaning of a given word is displayed automatically will tend to increase (disregarding the inherent unpredictability of the frequency of appearance of the word in the normal text). In this way the frequency of the textual explanation of a particular advanced word will gradually diminish in a dynamic manner as the reader becomes familiar with the word, without requiring any action by the user. Theories regarding knowledge acquisition suggest that newly-learned information is retained effectively if the information is presented to the user at progressively longer intervals (in this regard reference may be made to the Supermemo technique described, for example, at http://www.supermemo.com/english/ol/beginning.htm). Thus, it will be understood that the second dynamic control method according to the invention is well-suited to ensuring that a user retains the automatically-displayed word meanings in the long term.

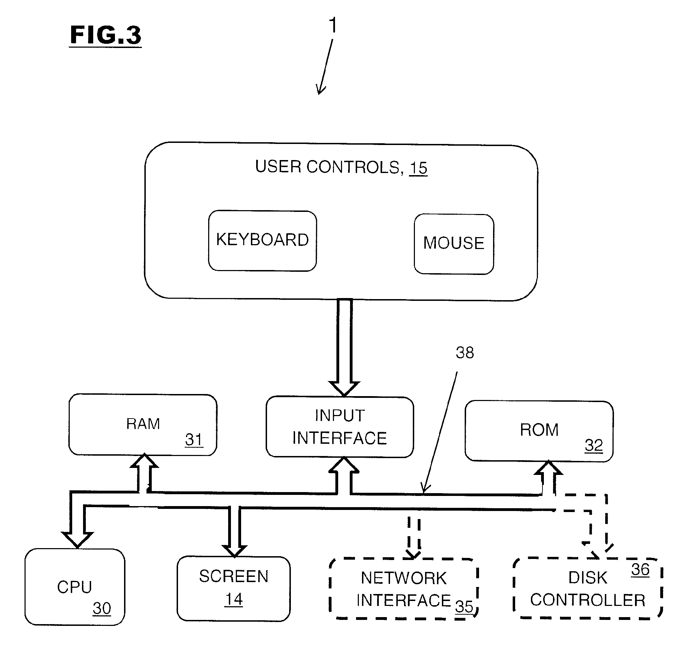

As mentioned above Fig.2 represents the functions performed in an e-reader according to an embodiment of the invention. Fig.3 shows one example of hardware that may be used to implement these functions. It will be seen that Fig.3 represents an e-reader 1 which includes the above-mentioned user controls 15 (which may include a keyboard, mouse, buttons, etc., as desired) supplying signals to an input interface 31 of a processing system including various components that are interconnected by a bus 38. The processing system includes a processor (the CPU 30), a ROM 32 storing programs and routines to be implemented by the CPU 30, and a RAM 33 serving as working memory. The ROM 32 may serve as the memories 24 and 25 shown in Fig.2. In suitable cases the e-reader hardware may also include a network interface 35 and a disk controller 36. The processing system sends image data to the display screen 14 of the e-reader.

It will be understood that in the present invention the repetition or stopping of automatic display of a given word-meaning on an e-reader is based on a determination of the extent to which the user is reading the definition of the word in question. The invention allows the automatic display of a given word to be phased out as the user becomes familiar with that word.

Although the invention has been described, in its various aspects, with reference to certain preferred embodiments it is to be understood that various modifications and improvements can be made without departing from the scope of the invention as defined in the appended claims.

For example, although the text above describes the calculation of the skip parameter in the context of an e-reader which displays text on a page-by-page basis, the invention is applicable also to e-readers which display text in other ways, for example by scrolling. In the latter case, the skip parameter is calculated based on monitoring of the scrolling speed, and the memory 24 stores an indication of usual scrolling speed. In this case, if the user scrolls through the text at a slow rate relative to his usual scrolling speed (taking into account the average amount of normal text occupying the display screen at a given moment while scrolling is being monitored) then this is an indication that he is reading the word meanings that are displayed on the display screen in association with the normal text and it is appropriate to set the skipping parameter to a value which maintains automatic display of the word meanings in question. Conversely, if the user scrolls through the text at a rate equal to or close to his usual scrolling rate then this is an indication that he is not reading the displayed word meanings and it is appropriate to set the skip parameter to a value which reduces the likelihood of automatically displaying the word meanings in question.

As another example, although Fig.1 illustrates word meanings displayed in a dedicated region to the right of the normal text it is to be understood that the invention is not particularly limited with regard to the spatial arrangement of the normal text and the automatically-displayed word meanings.

Further, in the specific embodiment discussed above, the dictionary module detects dictionary words which appear in the text one page ahead of the page currently being displayed. It will be readily understood that the dictionary module may be configured to detect dictionary words in text two or more pages ahead of the page currently being displayed.

In the specific embodiment discussed above, the word-definition auto-display module notifies the reading module of the word meanings that are to be displayed automatically in association with the next page of text and the reading module formulates the page of normal text + word meanings to be displayed on the screen 14. However, it will be readily understood that in a suitable case the word-definition auto-display module may be configured to send the word meanings directly to the display 14, to be juxtaposed with an image of the normal text provided by the reader module 12.

In the specific embodiment discussed above the user-operable controls are physical buttons and the like provided on the housing of a dedicated e-reader device. However, the user-operable controls can take any desired form, notably a form suited to the specific nature of the device being used for e-reading. Thus, for example, when the device is a tablet having a tactile screen the user can input commands by touching portions of the screen (as well as by any other desired techniques), when the device is a computer the user can input commands using a keyboard, mouse or other input device, etc.

**Claims**

1. An e-reader device (1) comprising:

   a reading module (12) configured to control display of portions of a text;
   at least a first user operable control (6b) configured to enable the reading module (12) to progressively display portions of said text;
   a dictionary module (17) configured to determine whether the next portion of text to be displayed by the reading module (12) comprises at least one of the words in a first set of words; and
   an automatic word-meaning-display module (18) configured to display, in association with said next portion of the text, the meanings of words comprised in the first set of words that appear in said next portion of text, wherein:

      the e-reader device (1) comprises:

         a monitoring module (20) configured to monitor the rate at which portions of the text are displayed by the reading module (12);
         a skip parameter calculation module (21) configured to generate, for each of the words of said first set of words, a skip parameter based at least in part on the rate, determined by the monitoring module (20), at which portions of the text are displayed when the meaning of said word is displayed; and

      the automatic word display module (18) is configured to dynamically control the display of the meaning of a word appearing in the next portion of the text, dependent on the value of the skip parameter for said word.

2. An e-reader device (1) according to claim 1, wherein the automatic word display module (18) is configured to inhibit the display of the meaning of a word when the value of the skip parameter for said word is indicative of portions of the text being displayed rapidly on occasions when the meaning of said word is displayed.

3. An e-reader device (1) according to claim 2, wherein the automatic word display module (18) is configured to control display of the meaning of a word selectively, dependent on the result of a comparison of the value of the skip parameter of said word with a first threshold value.

4. An e-reader device (1) according to claim 1, 2 or 3, wherein the dictionary module (17) is configured to remove a word from said first set of words selectively, dependent on the result of a comparison of the value of the skip parameter of said word with a further threshold value.

5. An e-reader device (1) according to any previous claim, wherein the dictionary module (17) is configured to add, into said first set of words, words selected in a database (16).

6. An e-reader device according to any previous claim wherein the user-operable controls (15) comprise a control operable to manually instruct display of the meaning of a chosen word, and the skip parameter calculation module (21) is configured to update the skip parameter of a chosen word when the display of the meaning of said chosen word is instructed.

7. An e-reader device according to any previous claim, wherein the first user operable control (6b) is configured to change the portion of the text to be displayed, the monitoring module (20) is configured to monitor the rate at which portions of the text are displayed, and the skip parameter calculation module (21) is configured to update the value of the skip parameter of a given word based on the rate at which portions of the text are displayed, on an occasion where the meaning of the given word is displayed on said displayed portion of the text.

8. An e-reader device according to claim 7, wherein the skip parameter calculation module (21) is configured not to update the value of the skip parameter of a given word when the monitored value of the rate at which portions of the text are displayed is an outlier value.

9. A method of controlling automatic word-meaning display in an e-reader, the method comprising the steps of:

progressively displaying portions of a text in response to an activation of at least a first user operable control (6b);
determining whether the next portion of text to be displayed comprises at least one of the words in a first set of words; and
displaying, in association with said next portion of the text, the meanings of words in said first set of words that the determining step has determined appear in said next portion of the text;
wherein there are further provided the steps of:

monitoring the rate at which portions of the text are displayed; and
generating, for each of the words of said first set of words, a skip parameter value based at least in part on the rate, determined in the monitoring step, at which portions of the text are displayed when the meaning of said word is displayed; and
wherein the word-meaning displaying step dynamically controls the display of the meaning of a word determined by the determining step as appearing in the next portion of the text, dependent on the skip parameter value generated for said word in the skip parameter value generating step.

10. A method of controlling automatic word-meaning display in an e-reader, according to claim 9, wherein the word-meaning displaying step inhibits the display of the meaning of a word when the skip parameter value for said word is indicative of portions of the text being displayed rapidly on occasions when the meaning of said word is displayed.

11. A method of controlling automatic word-meaning display in an e-reader, according to claim 9 or 10, wherein during the word-meaning displaying step the meaning of a word is displayed selectively, dependent on the result of a comparison of the skip parameter value of said word with a first threshold value.

12. A method of controlling automatic word-meaning display in an e-reader, according to claim 9, 10 or 11, and comprising the step of removing a word from said first set of word selectively, dependent on the result of a comparison of the skip parameter value of said word with a further threshold value.

13. A method of controlling automatic word-meaning display in an e-reader, according to any one of claims 9 to 12, and comprising the step of: updating the skip parameter value of a word when receiving a instruction to display the meaning of said word.

14. A method of controlling automatic word-meaning display in an e-reader, according to any one of claims 9 to 13, wherein during the monitoring step the rate at which portions of the text are displayed is monitored, and during the skip parameter value generating step the skip parameter value of a given word is updated based on the rate at which the user advances from one page of the displayed text to the next page, on an occasion where the meaning of the given word is displayed on said portion of the text.

15. A computer-readable medium bearing computer-executable instructions adapted to cause a computer system to perform the method of any one of claims 9 to 14.

# FIG.1

to his curacy—what it was, is not now known precisely—took him to Paris.

Among other personages of authority he went to Cardinal Fesch on behalf of his parishioners.

One day, when the emperor had come to visit his uncle, he happened to pass by the worthy priest, who was waiting in the anteroom. Napoleon noticing that the old man looked at him with a certain curiousness, turned around and said brusquely:

"Who is this goodman who is looking at me?"

"Sire," said M. Myriel, "you behold a good man, and I a great man. Each of us may profit by it."

That evening the emperor asked the cardinal the name of the curé and some time afterwards M. Myriel was overwhelmed with surprise on learning that he had been appointed Bishop of D——.

When M. Myriel came to D—— he was accompanied by an old lady, Mademoiselle Baptistine, who was his sister, ten years younger than himself.

Their only domestic was a woman of about the same age as Mademoiselle Baptistine, who was called Madame Magloire, and who after having been the servant of M. le curé, now took the double title of femme de chambre of Mademoiselle and housekeeper of Monseigneur.

Mademoiselle Baptistine was a tall, pale, thin, sweet person. She fully realised the idea which is expressed by the word "respectable;" for it seems as if it were necessary that a woman should be a mother to be venerable. She had never been pretty; her whole life, which had been but a succession of pious works, had produced upon her a kind of transparent whiteness, and in growing old she had acquired what may be called the beauty of goodness. What had been thinness in her youth had become in maturity transparency, and this etherialness permitted the angel within to shine through. She was more a spirit than a virgin mortal. Her form was shadow-like, hardly enough body to convey the thought of sex—a little earth containing a spark—large eyes, always cast down; a pretext for a soul to remain on earth.

Madame Magloire was a little, white, fat, jolly, bustling old woman, always out of breath, caused first by her activity, and then by the asthma.*

M. Myriel, upon his arrival, was installed in his episcopal palace with the honours ordained by the imperial decrees, which class the bishop next in rank to the field-marshal. The mayor and the president made him the first visit, and he, for his part, paid like honour to the general and the prefect.

The installation being completed, the town was curious to see its bishop at work.

an-te-room [an-tee-room]
1. a room that admits to a larger room
2. a waiting room

brusque [brusk]
1. abrupt in manner: blunt, rough. A brusque welcome greeted his unexpected return

pious [pahy-uhs]
1. having or showing a dutiful spirit of reverence for God or an earnest wish to fulfill religious obligations
2. characterized by a hypocritical concern with virtue or religious devotion: sanctimonious

ethereal [ih-theer-ee-uh]
1. light, airy, or tenuous: an ethereal world created through the poetic imagination
2. extremely delicate or refined: ethereal beauty
3. heavenly or celestial: gone to his ethereal home

episcopal [ih-pis-kuh-puh]
1. of or pertaining to a bishop: episcopal authority
2. based on or recognizing a government order of bishops: an episcopal hierarchy
3. designating the Anglican Church or some branch of it, as the Episcopal Church in America

# FIG.2

E-BOOK MEMORY
11

WORD BANK
16

From 20

USER DICTIONARY
MODULE, 17

SKIP VALUE
CALCULATOR
21

READING SPEED
MEMORY, 24

READING
MODULE
12

MONITORING
MODULE
20

RETIRED WORD
MEMORY, 25

USER
CONTROLS
15

WORD-DEFINITION
AUTO-DISPLAY
MODULE
18

SCREEN
14

**FIG.3**

1

USER CONTROLS, 15

KEYBOARD

MOUSE

38

RAM

31

INPUT
INTERFACE

ROM

32

CPU

30

SCREEN

14

NETWORK
INTERFACE 35

DISK
CONTROLLER

36

**EP 2 645 270 A1**

Europäisches
Patentamt

European
Patent Office

Office européen
des brevets

# EUROPEAN SEARCH REPORT

Application Number

EP 12 30 5385

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/102345 A2 (YISSUM RES DEV CO [IL]; RAPPOPORT ARI [IL]) 28 August 2008 (2008-08-28) | 1,2,5,9, 10,15 | INV. G06F17/24 G06F17/27 G06F3/048 |
| Y | * summary; page 9, line 21 to page 13, line4; figures 1,2 * | 7,14 | |
| Y | US 2011/112671 A1 (WEINSTEIN PHIL [US]) 12 May 2011 (2011-05-12) | 7,14 | |
| A | * paragraphs [0003], [0006], [0017] - [0027] * | 1,5,9, 13,15 | |
| A | US 2007/233461 A1 (FASCIANI DANTE [IT] ET AL) 4 October 2007 (2007-10-04) * paragraph [0021] - paragraph [0044]; figures 3,4 * | 1,3-6,9, 11-13,15 | |

|  | TECHNICAL FIELDS SEARCHED (IPC) |
|---|---|
|  | G06F |

The present search report has been drawn up for all claims

| Place of search | Date of completion of the search | Examiner |
|---|---|---|
| Berlin | 26 October 2012 | Alt, Susanne |

EPO FORM 1503 03.82 (P04C01)

## ANNEX TO THE EUROPEAN SEARCH REPORT
## ON EUROPEAN PATENT APPLICATION NO.

EP 12 30 5385

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2012

| Patent document cited in search report | | Publication date | Patent family member(s) | | Publication date |
|---|---|---|---|---|---|
| WO 2008102345 | A2 | 28-08-2008 | EP 2126878 A2<br>US 2009306959 A1<br>WO 2008102345 A2 | | 02-12-2009<br>10-12-2009<br>28-08-2008 |
| US 2011112671 | A1 | 12-05-2011 | NONE | | |
| US 2007233461 | A1 | 04-10-2007 | NONE | | |

EPO FORM P0459

For more details about this annex : see Official Journal of the European Patent Office, No. 12/82